# DEMANDE DE BREVET EUROPEEN

(11) **EP 1 950 649 A2**
(43) Date de publication de la demande: **30.07.2008**
(21) Numéro de dépôt: 08008243.1
(22) Date de dépôt: 23.02.2005
(51) Int. Cl.: G06F 3/033

(54) **Dispositif d'acquisition d'informations tactiles à balayage séquentiel**

(30) Priorité: 23.02.2004 FR 0450329
(62) Demande divisionnaire de: 05730729.0
(71) Demandeur: Stantum, 33000 Bordeaux (FR)
(72) Inventeur: Joguet, Pascal, 33670 Sadirac (FR); Larguillier, Guillaume, 33000 Bordeaux (FR)
(74) Mandataire: Bredema

(57) **Abrégé**

L'invention se rapporte à un dispositif d'acquisition d'informations tactiles comprenant un capteur tactile matriciel (101) pourvu de lignes et de colonnes, dans lequel le dispositif comprend des moyens électroniques de balayage agencés pour balayer séquentiellement les lignes et les colonnes du capteur tactile matriciel.

## Description

L'invention se rapporte à un dispositif d'acquisition d'informations tactiles selon le préambule de la revendication 1.

L'invention se rapporte également à un procédé pour acquérir des informations tactiles selon le préambule de la revendication 14.

On connaît de tels dispositifs d'acquisition d'informations tactiles.

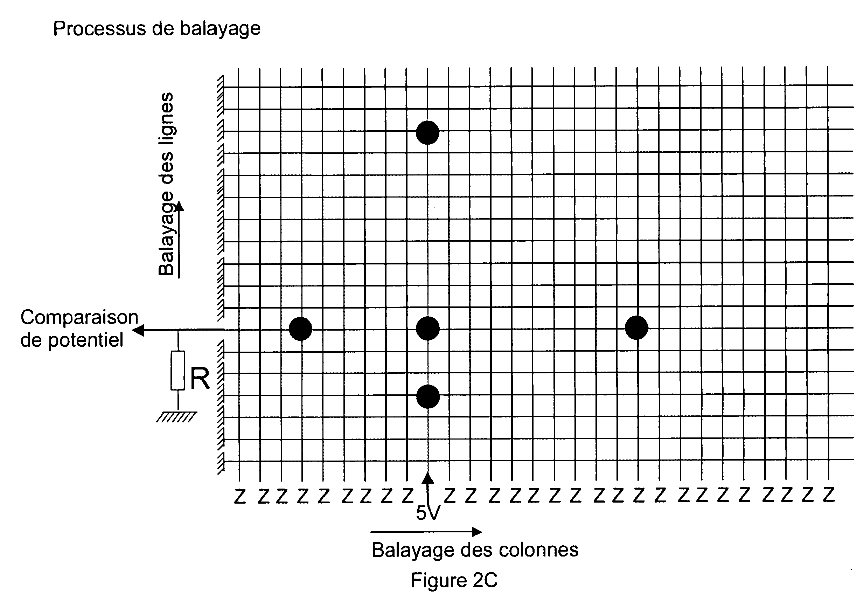

Toutefois, dans ces dispositifs connus, et comme illustré en FIG. 2C, si on effectue une mesure simultanée de toutes les lignes en alimentant une colonne, des problèmes d'orthogonalité surviennent. Le point de contact n°1 va masquer le point de contact n°2. De même, si on mesure une ligne lorsque toutes les colonnes sont alimentées, le point de contact n°2 est masqué par le point de contact n°1.

Dès lors, les dispositifs d'acquisition d'informations tactiles connus ne permettent pas une détection simultanée satisfaisante de plusieurs points de contact.

L'invention vise donc à fournir un dispositifs d'acquisition d'informations tactiles permettant une détection simultanée satisfaisante de plusieurs points de contact.

En particulier, l'invention vise notamment à éviter l'apparition de problème d'orthogonalité dans la détection simultanée de plusieurs points de contact.

Pour résoudre ce problème, l'invention se rapporte à un dispositif d'acquisition d'informations tactiles selon la revendication 1 et à un procédé pour acquérir des informations tactiles selon la revendication 14.

Grâce au balayage séquentiel des lignes et des colonnes du capteur matriciel, on évite les problèmes d'orthogonalité susmentionnés, de sorte que la détection simultanée de plusieurs points de contact est améliorée.

Des modes de réalisation avantageux de l'invention sont décrits dans les revendications dépendantes.

On comprendra mieux l'invention à l'aide de la description, faite ci-après à titre purement explicatif, d'un mode de réalisation de l'invention, en référence aux figures annexées où :
- la figure 1A est un diagramme fonctionnel du contrôleur selon l'invention,
- la figure 1B représente la structure du contrôleur associé au diagramme fonctionnel selon l'invention,
- la figure 1C représente le diagramme fonctionnel des différentes étapes des processus d'acquisition des données provenant du capteur, de la création des curseurs associés aux différents doigts, de l'interaction avec les objets graphiques et de la génération des messages de contrôle,
- la figure 2A est une description du capteur tactile matriciel,
- la figure 2B décrit la première étape du fonctionnement du balayage du capteur en vue d'obtenir l'information multi-contact,
- les figures 2C, 2E et 2F expliquent la résolution des problèmes d'orthogonalité,
- la figure 2D est un diagramme fonctionnel de l'interface de capture,
- la série de figures 3A à 3F explique les étapes de création de curseurs, de filtrage, de calcul de barycentre, de mapping et de contrôle des objets graphiques,
- les figures 4 et 5 représentent différents exemples d'objets graphiques,
- les figures 6 à 10 représentent différents exemples de combinaisons d'objets graphiques sur le contrôleur,
- la figure 11 illustre l'utilisation en réseau du contrôleur associé à l'ordinateur de l'utilisateur.

Dans toute la suite, le contrôle s'effectue sur un équipement informatisé pouvant être par exemple un logiciel de musique, un automate, un équipement audiovisuel, ou un équipement multimédia.

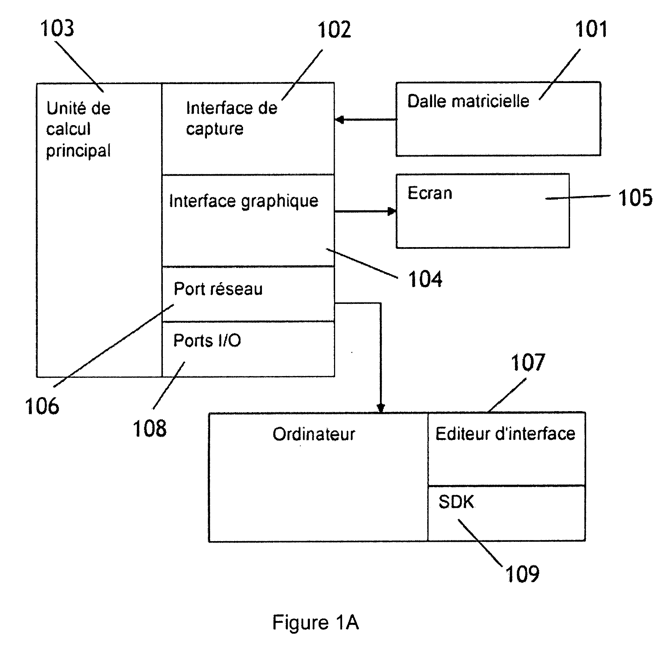

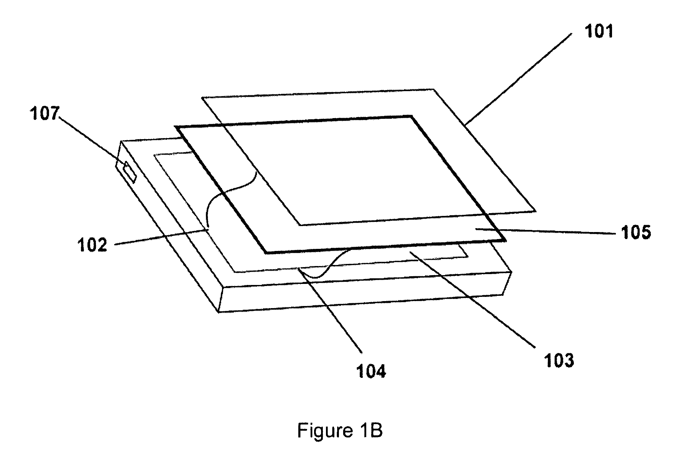

Illustré figures 1A, 1B et plus précisément 2A, le premier élément fondamental de la présente invention est le capteur matriciel (101), nécessaire à l'acquisition (manipulations multi-contact) à l'aide d'une interface de capture (102). Le capteur peut être éventuellement divisé en plusieurs parties afin d'accélérer la captation, chaque partie étant balayée simultanément.

Le principe général est de créer autant de curseurs (comme un curseur de souris) qu'il y a de zones détectées sur le capteur et de suivre leurs évolutions dans le temps.

Lorsque l'utilisateur retire ses doigts du capteur, les curseurs associés sont détruits.

De cette manière, on capte la position et l'évolution de plusieurs doigts sur le capteur simultanément. C'est une captation multi-contact tout à fait innovante pour ce type de contrôleur.

Le capteur utilisé pour l'exemple d'implémentation de l'invention est une dalle tactile résistive matricielle de type connue.

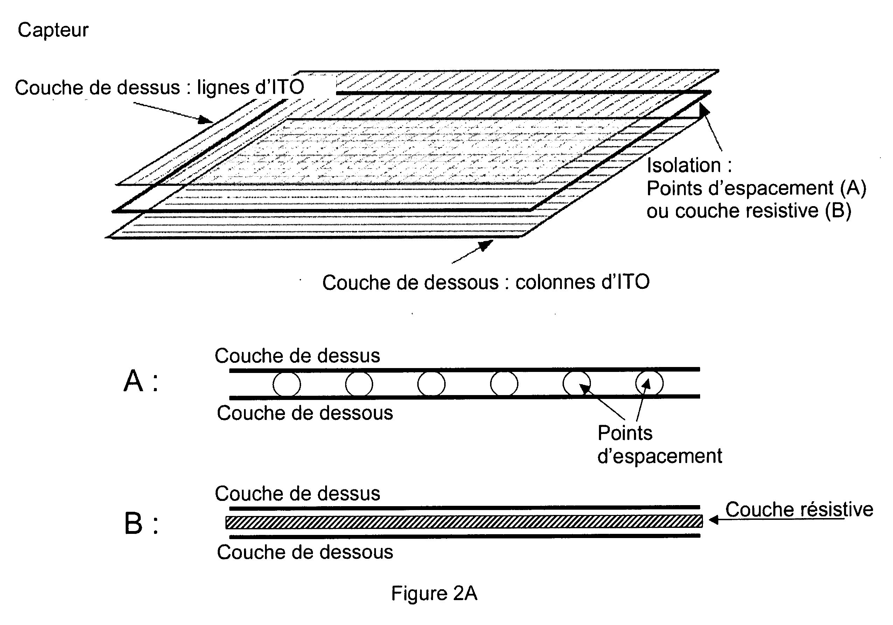

Les dalles tactiles résistives matricielles sont composées de 2 faces superposées sur lesquelles sont organisées des pistes d'ITO (oxyde indium étain), qui est un matériau conducteur translucide. Les pistes forment disposées en lignes sur la couche supérieure et en colonnes sur la couche inférieure, formant une matrice. (cf. figure 2A).

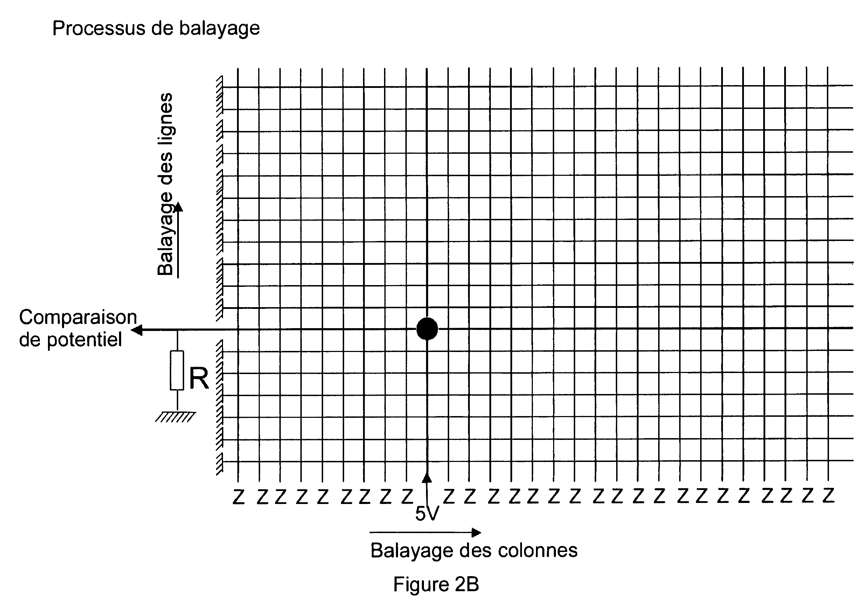

Les deux couches conductrices sont isolées l'une de l'autre par des entretoises d'espacement. L'intersection d'une ligne avec une colonne forme un point de contact. Quand on pose un doigt sur la dalle, on met en contact une ou des colonnes situées sur la couche supérieure avec une ou des lignes situées sur la couche inférieure créant ainsi un ou plusieurs points de contact. (cf. figure 2B).

Avantageusement, une variante de l'invention consiste à remplacer les entretoises par un matériau résistif transparent (par exemple un polymère conducteur), dont la résistance varierait en fonction de l'écrasement, celle-ci chutant si l'on exerce une force d'appui suffisante. De cette manière, on pourrait également extraire la pression exercée sur la surface en effectuant une mesure de résistance à chaque intersection ligne-colonne.

En vue de l'utilisation musicale ou audiovisuelle de ces dalles, l'impératif est de mesurer l'activité d'un doigt avec une latence maximum de 20 ms.

On mesure au moins 100 fois par seconde l'état de la dalle, celle-ci pouvant être divisée en plusieurs zones afin d'effectuer un traitement parallèle sur les lesdites zones.

Ainsi, selon l'invention, la fréquence d'échantillonnage de la dalle est d'au moins 100 Hz.

Un autre élément fondamental est le dispositif électronique de balayage de la dalle tactile permettant la détection simultanée de plusieurs points de contact sur le capteur matriciel. En effet, les méthodes d'acquisitions connues pour ce type de capteurs ne permettent pas la détection de plusieurs points de contact simultanés.

Les méthodes connues à ce jour ne permettent pas de résoudre les problèmes illustrés par la figure 2C.

Si on effectue une mesure simultanée de toutes les lignes en alimentant une colonne, des problèmes d'orthogonalité surviennent. Le point de contact n°1 va masquer le point de contact n°2. De même, si on mesure une ligne lorsque toutes les colonnes sont alimentées, le point de contact n°2 est masqué par le point de contact n°1. La solution proposée pour résoudre ce problème consiste à effectuer un balayage séquentiel du capteur.

Les colonnes sont alimentées par exemple en 5V à tour de rôle et on mesure le niveau des lignes (niveau haut ou bas) séquentiellement.

Quand une des colonnes est mise sous tension, les autres sont en haute impédance afin d'empêcher la propagation du courant dans celles-ci.

Ainsi, on alimente d'abord la colonne 1 tandis que les autres colonnes sont en haute impédance.

Les lignes sont mesurées séquentiellement, c'est-à-dire les unes après les autres. On lit dans un premier temps la valeur sur la première ligne tandis que l'on relie toutes les autres lignes à la masse. Puis on relie la ligne 1 à la masse et on lit la valeur sur la ligne 2, et ainsi de suite jusqu'à ce que l'on ait lu la valeur de toutes les lignes.

La colonne 1 passe ensuite à l'état de haute impédance et la colonne 2 est alimentée. On recommence à lire l'état de chacune des lignes.
On effectue ainsi le balayage jusqu'à la dernière colonne.

Le but étant de former une dalle multi-contact, le balayage total de la matrice se fait à une fréquence élevée afin d'obtenir la valeur de chacun des points d'intersection de la dalle plusieurs fois par seconde.

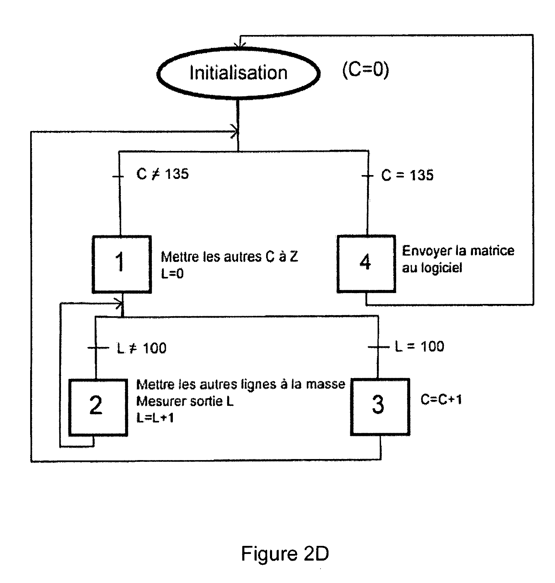

Le dispositif permettant d'acquérir les données de la dalle est illustré par la figure 2D, représentant l'algorithme d'acquisition d'une dalle comprenant 100 lignes (L) et 135 colonnes (C).

Certains problèmes de masquage d'un point par un ou plusieurs autres points peuvent apparaître.
En effet, la résistance du matériau transparent (ITO) composant les colonnes et les lignes augmente proportionnellement à la longueur des pistes. Ainsi, le potentiel mesuré au coin inférieur gauche du capteur sera supérieur au potentiel mesuré à au coin supérieur droit.

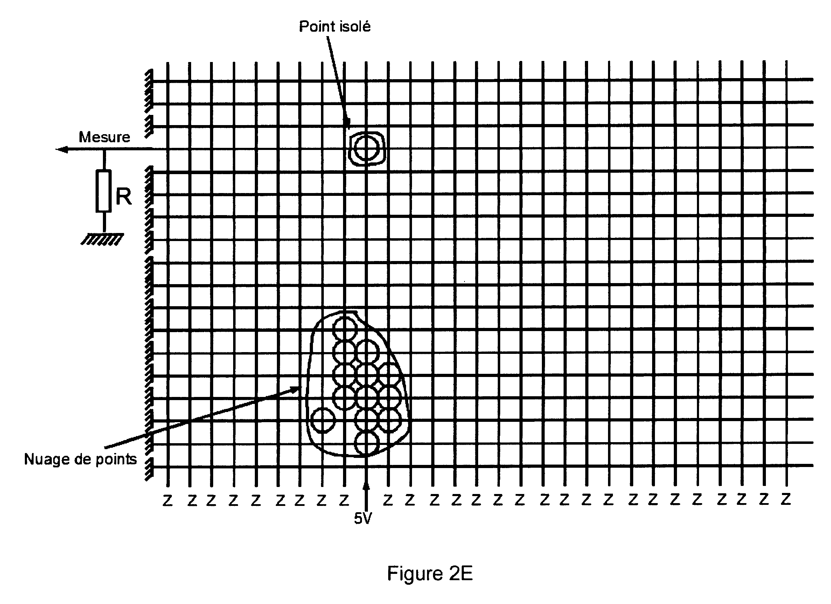

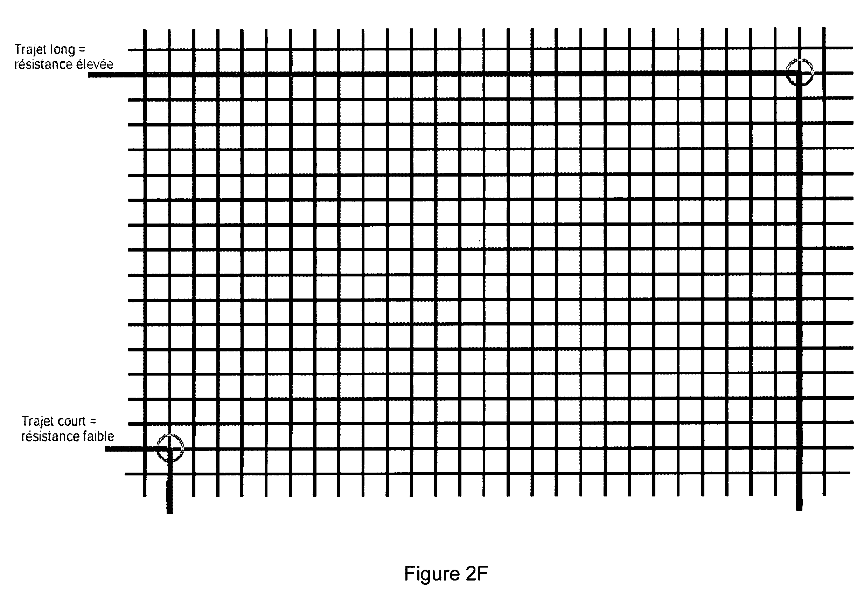

Sur les figure 2E et 2F, le nuage de points absorbe une grande partie du potentiel électrique de la colonne alimentée. Le potentiel mesuré sur le point isolé est donc trop faible pour être détecté.

La solution à ce problème consiste à utiliser un comparateur de tension piloté numériquement en sortie de la ligne afin de déterminer si la tension observée est suffisante pour être considérée comme résultant de l'action d'un doigt sur la dalle tactile. La valeur de référence du comparateur (seuil de comparaison) est décrémentée à chaque mesure de ligne. Ainsi les valeurs de comparaisons des dernières lignes sont inférieures à celles des premières lignes, ce qui permet de détecter de la même manière un point de contact situé en bas à gauche ou en haut à droite.

On effectue alors par exemple l'échantillonnage complet de la dalle au moins 100 fois par seconde pour les colonnes et les lignes.

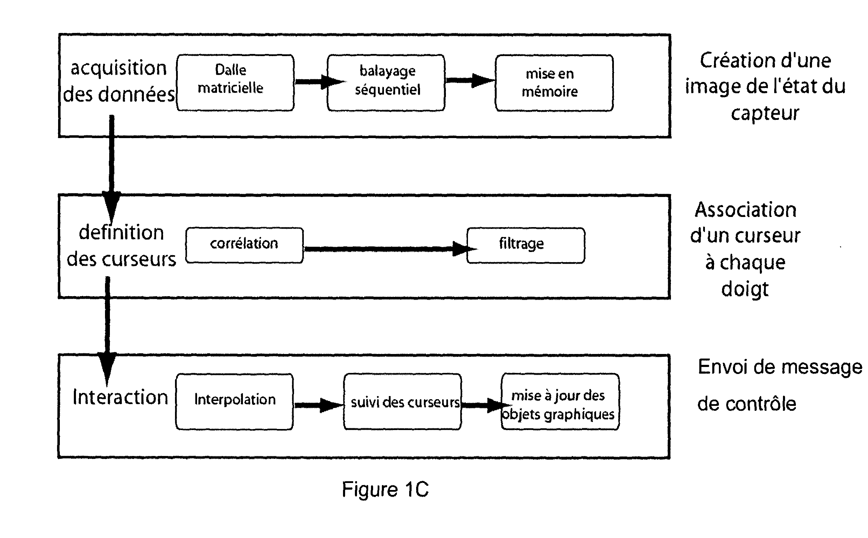

Les données issues de l'interface de capture (102) forment ainsi une image représentative de l'ensemble du capteur. Cette image est placée en mémoire afin qu'un programme puisse procéder au filtrage, à la détection des doigts et à la création des curseurs. On se référera à cet effet à la figure 1C.

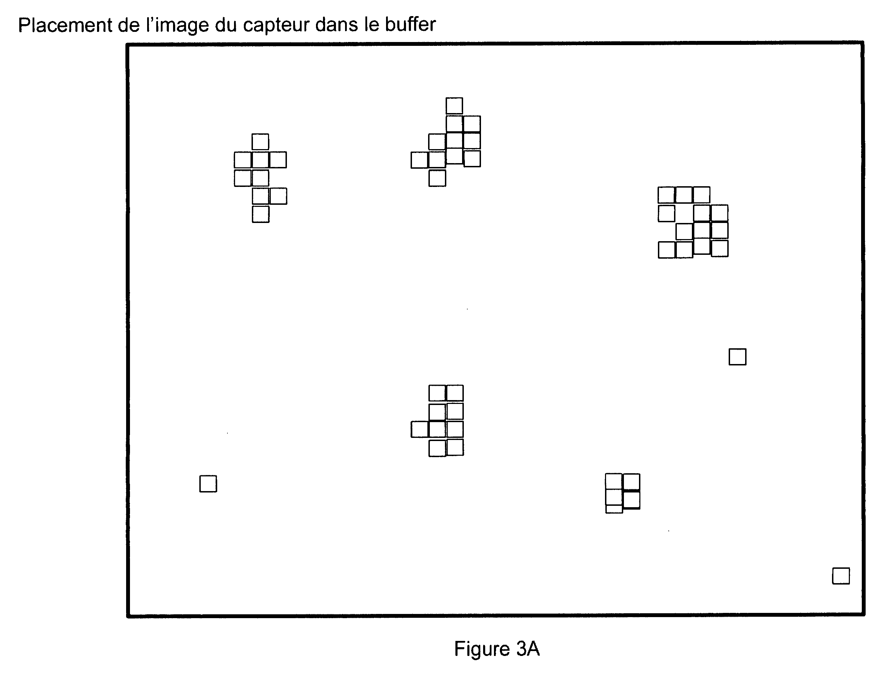

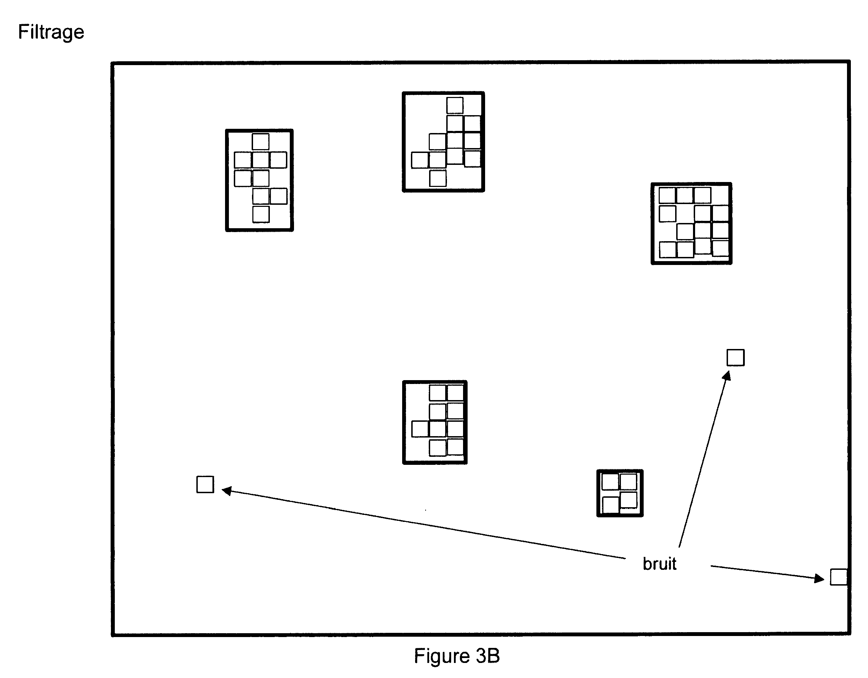

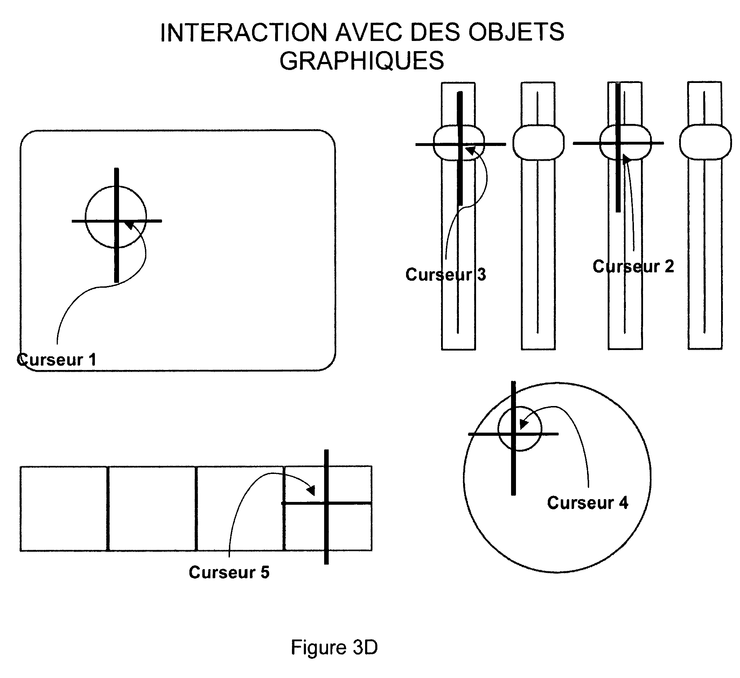

La phase de filtrage illustré par la figure 3B consiste à éliminer le bruit éventuellement généré par l'interface d'acquisition ou le capteur lui-même. On considère que seuls des nuages de plusieurs points de contact peuvent correspondre à l'appui d'un doigt. On effectue donc une détection de zone englobante afin d'éliminer des points de contact isolés.

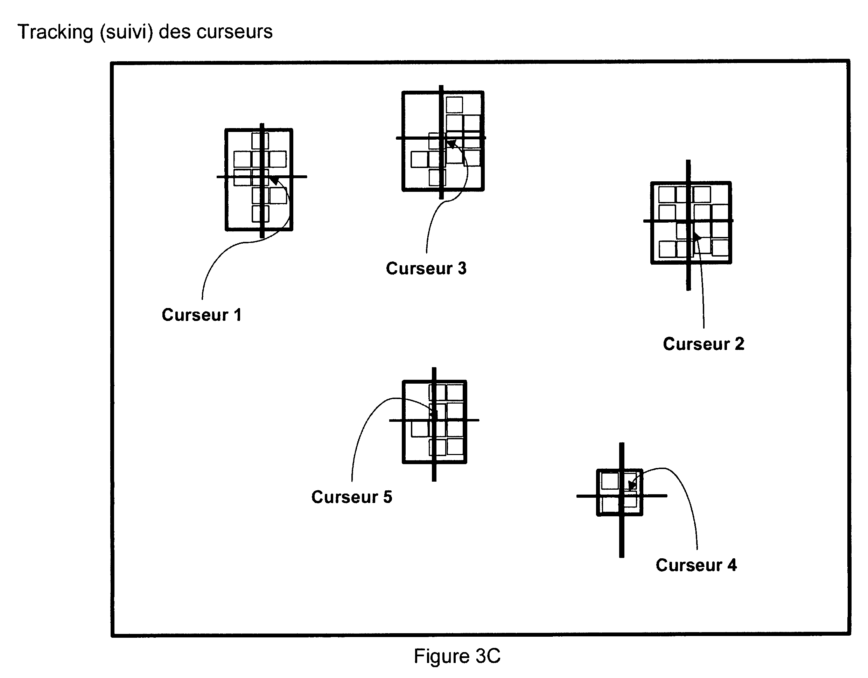

L'étape suivante consiste à associer un curseur à chaque point d'appui (figure 3C). À cet effet, on calcule le barycentre de chaque zone englobante. Lorsqu'un doigt est relâché, le curseur correspondant est libéré.

Le programme exécuté localement par le processeur principal permet d'associer ces curseurs à des objets graphiques qui sont affichés sur l'écran (105) afin de les manipuler. Simultanément, le programme local utilise ces curseurs pour générer des messages de contrôle adressés à l'ordinateur hôte ou l'appareil contrôlé.

En outre, le programme comporte un simulateur de modèles physiques permettant de modifier les lois d'interaction entre les curseurs et les objets graphiques. Différents modèles physiques peuvent être employés : système masse-ressort, vibration d'une corde, gestion des collisions, loi de la gravité, champ électromagnétique.

Le programme considère le positionnement des curseurs et sur quel objet graphique chacun se situe. En fonction de l'objet considéré, un traitement spécifique est appliqué aux données provenant du capteur. Par exemple, une mesure de pression (correspondant à une évolution de la tache faite par le doigt sur la dalle tactile dans un court intervalle de temps) peut être interprétée. En fonction de la nature de l'objet, d'autres paramètres peuvent être déduits : l'accélération, la vitesse, les trajectoires, etc. Des algorithmes de reconnaissance de forme peuvent être appliqués également afin de différencier différents doigts.

Le programme principal (103) transmet également à l'interface graphique (104) les données à afficher à l'écran (105). Cette interface graphique est en outre constituée d'un processeur graphique. Ce processeur graphique est par exemple de type connu. Ce dernier peut être constitué de fonctions graphiques primitives permettant par exemple l'affichage de bitmap, de polices de caractères de polygones et de figures en 2 et 3 Dimensions, le dessin vectoriel, l'antialiasing, le texturage, la transparence et l'interpolation de couleurs.

Dans cette déclinaison de l'invention, le programme principal comprend également un analyseur d'expressions mathématiques qui permet de saisir et de calculer en temps réel des fonctions mathématiques. Celles-ci permettent de modifier les valeurs de toute variable. Par exemple, les coordonnées (x, y) d'un curseur à l'intérieur d'un objet peuvent être considérées comme deux variables comprises entre 0 et 1. L'analyseur d'expression permet de créer une expression du type « x*1000+600 » afin d'obtenir une nouvelle variable, dont la valeur sera comprise entre 600 et 1600. La variable obtenue permet de contrôler par exemple la fréquence d'un oscillateur comprise entre 600 et 1600 hertz.
Les expressions mathématiques peuvent s'appliquer aussi bien à des valeurs scalaires qu'à des vecteurs.

L'analyseur d'expression est un outil permettant d'effectuer des calculs temps réel sur les variables des objets.

Le programme local (103) réalise également un formatage des données sous forme de messages pour le port réseau (106), qui les communiquera à l'ordinateur sur lequel sont exécutées les applications informatiques.

L'interface réseau est par exemple une interface Ethernet 10/100 baseT standard, qui communique par paquets grâce au protocole TCP/IP. Elle peut aussi être une interface réseau de type sans fil.

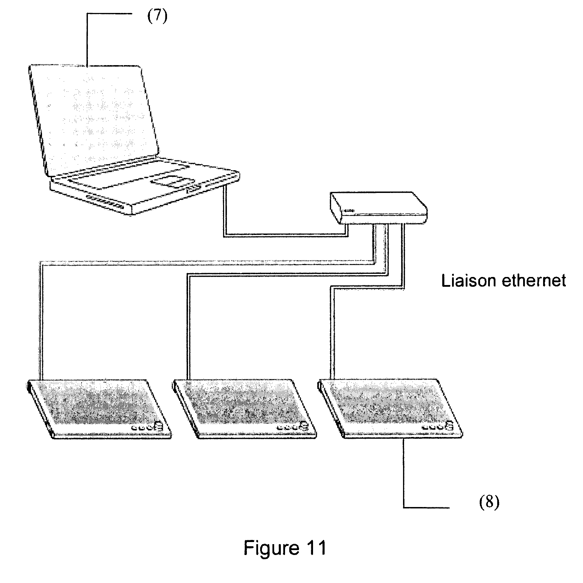

Illustré figure 11, il faut noter que la liaison Ethernet offre à l'utilisateur la possibilité, grâce à l'utilisation d'un simple hub (multiprise réseau), d'étendre indéfiniment son dispositif de contrôle en constituant un réseau de contrôleurs selon l'invention.

Le (ou les) contrôleur(s) présent(s) sur le réseau communique(nt) alors entre eux et avec l'ordinateur hôte sous la forme d'envois réciproques de messages.

L'ensemble constituant la machine est par ailleurs alimentée par une batterie non représentée de type connu ou par un adaptateur secteur.
Enfin, au niveau de l'ordinateur de l'utilisateur, un éditeur d'interface (107) permet de programmer de manière graphique l'interface, c'est-à-dire l'ensemble des objets graphiques affichés sur l'écran (105). Dans ce mode de réalisation de l'invention, les interfaces sont elles-mêmes organisées en scènes, qui sont des structures hiérarchiques supérieures. Chaque scène comprend en effet plusieurs interfaces. L'utilisateur peut permuter les interfaces à l'aide d'un clavier de bouton ou d'un pédalier de contrôle connecté au port d'entrée-sortie (109).

Une autre fonction de l'éditeur d'interface est d'affecter les données de contrôle aux paramètres que l'utilisateur souhaite contrôler

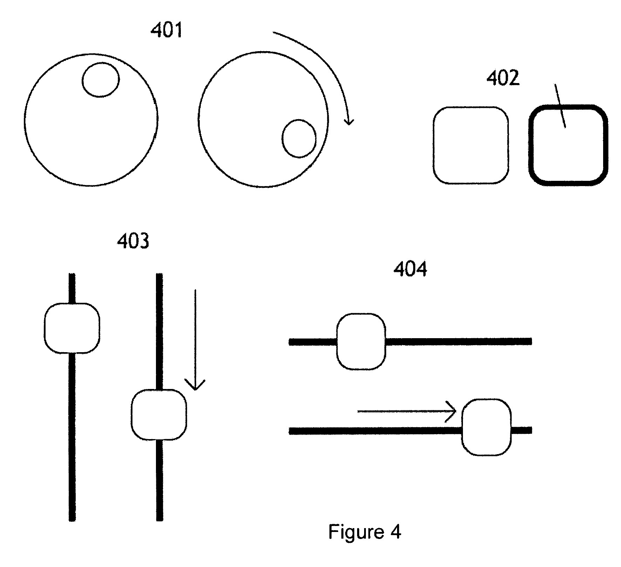

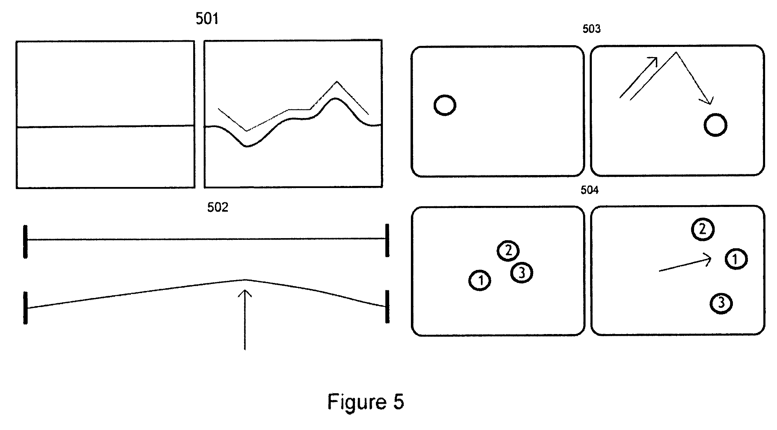

L'utilisateur dispose par exemple d'une bibliothèque d'objets graphiques paramétrables permettant de composer différentes interfaces selon l'application désirée. Les figures 4 et 5 représentent différents objets graphiques mis à la disposition de l'utilisateur.

Ils peuvent être prédéfinis et dédiés tout particulièrement à la musique ou au contrôle d'équipements audiovisuels ou d'appareils informatisés. Par exemple, un potentiomètre linéaire (403, 404) est particulièrement adapté à contrôler des paramètres continus tels que le volume d'un signal sonore, la fréquence d'un filtre. Une molette (401) peut par exemple servir à contrôler le défilement d'un lecteur audio ou vidéo. Les objets peuvent aussi être développés librement grâce à un kit de développement (SDK) de type connu (109). Le kit de développement donne accès aux fonctions primitives graphiques du contrôleur.

L'éditeur d'interface (107) permet ainsi à l'utilisateur de créer aisément des interfaces personnalisées de contrôle. C'est un logiciel exécuté sur l'ordinateur de l'utilisateur. Il se compose d'une fenêtre principale représentant la surface tactile de la dalle sur laquelle on peut déposer des objets graphiques issus d'une bibliothèque d'objets proposés. La manipulation et le placement des objets sur la surface s'effectuent à la souris, par exemple. L'objet déposé sur la fenêtre s'affiche simultanément sur le contrôleur, l'objet étant enregistré dans une mémoire du contrôleur. Il peut par la suite déplacer ou redimensionner les objets à sa convenance.

En plus du positionnement des objets graphiques sur la fenêtre principale, d'autres fenêtres secondaires permettent de régler différents paramètres inhérents aux objets (propriétés graphiques, comportement physique). Par exemple, un bouton (402) peut aussi bien agir comme un interrupteur ou comme une gâchette. Dans le cas du mode gâchette, une mesure de pression peut optionnellement être opérée. Un autre exemple d'objet paramétrable est l'aire 2D (503, 504), dont le principe consiste à déplacer des pions à l'intérieur d'une zone délimitée. Le nombre de pions présents sur l'aire2D est une option paramétrable. L'aire peut être configurée en mode uniplan, mode dans lequel les pions entrent en collision les uns avec les autres, ou multi-plan, mode où les pions sont placés sur des plans distincts superposés. Des paramètres physiques peuvent également être configurés : le coefficient de frottement des pions sur le plan, le rebond et l'attraction des pions sur les bords et entre eux.

L'éditeur permet également de lister les objets présents sur la surface, de créer des fonctions et des variables grâce à l'analyseur d'expression.

Ainsi, les objets ont par défaut un certain nombre de variables (x, y, z...) correspondant à leurs axes primitifs. Ces variables sont toujours comprises entre 0 et 1 et varient sous forme de nombres 32 bit à virgule flottante. L'utilisateur doit pouvoir « connecter » ces variables vers d'autres valeurs plus représentatives de ce qu'il souhaite contrôler. Ainsi, l'analyseur d'expression donne la possibilité de créer de nouvelles variables à l'aide d'expressions mathématiques simples. Par exemple, un potentiomètre rectiligne a un axe primitif qui est x. Si l'utilisateur désire contrôler une fréquence de 500 à 2500Hz, il doit créer une variable a=2000x+500.

Des options d'affichage de statut sont aussi souhaitées. Elles permettent de contrôler visuellement l'état d'un paramètre.

Les traitements ultérieurs qui seront appliqués aux objets au niveau de l'unité de calcul principale (103) par la manipulation sur la dalle sont spécifiques à chaque type d'objet.

En effet, un mouvement circulaire du doigt sur un potentiomètre linéaire virtuel (403, 404) ne doit pas avoir d'action sur l'état du potentiomètre, alors qu'il doit modifier l'état dans le cas d'un potentiomètre circulaire (401). De même, certains objets ne peuvent prendre en compte qu'un seul doigt (le potentiomètre linéaire par exemple) en même temps, tandis que d'autres peuvent accepter l'interaction de plusieurs doigts (clavier, aire2D).

Par exemple, l' « aire 2D » (503, 504) est une surface rectangulaire qui contient un certain nombre de pions, chacun ayant une position propre. Les pions peuvent être déplacés par l'utilisateur.

Le principe est de mettre en place un système physique pour l'ensemble des objets, c'est-à-dire par exemple que les pions déplacés par l'utilisateur acquièrent une vitesse d'inertie qu'ils gardent lorsque l'utilisateur les relâche ; les pions ainsi soumis à leur vitesse propre vont rebondir sur les bords de l' « aire 2D » et même rebondir entre eux. De plus, ils seront soumis à des forces d'attraction/répulsion sur les bords et sur les autres pions, ainsi qu'à un coefficient de frottement sur la surface de l'aire 2D, pour stopper les pions au bout d'un certain temps. Tous ces paramètres seront paramétrables.

Une autre variante de l'aire 2D consiste à appliquer une loi physique de type «masse-ressort ». Un élastique virtuel est tendu entre chaque curseur et chaque pion. L'utilisateur peut modifier le comportement de cet objet en configurant la friction et le facteur d'interpolation. Ces propriétés peuvent également être modifiées en temps réel à l'aide d'autres objets.

Un autre exemple est le « Multislider » (501), une table de curseurs dont le nombre est configurable. L'utilisation typique est le contrôle d'un égaliseur graphique ou d'une enveloppe spectrale. La différence entre un « multislider » et plusieurs potentiomètres linéaires simples juxtaposés est que l'on peut modifier l'ensemble des curseurs en un seul toucher, en faisant glisser le doigt. Le multislider peut également être utilisé comme une corde discrétisée. Pour cela, il suffit de lui appliquer le modèle physique d'une corde, dont la tension est paramétrable par l'utilisateur.

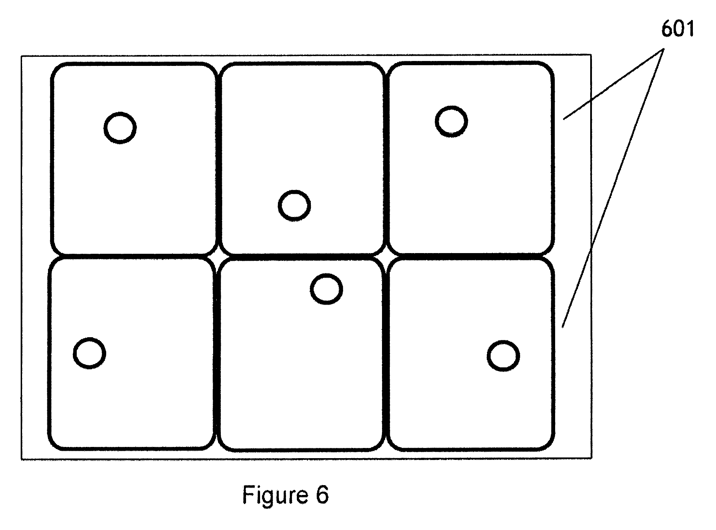

Une visualisation de différents exemples d'interfaces réunissant différents types d'objets est illustrée par les figures 6 à 9, où l'on peut observer plusieurs objets décrits ci-dessus.

La figure 6 représente un arrangement de 6 aire 2D (601) contenant chacune 1 pion. Cette interface pourrait contrôler, par exemple, six filtres différents affectés à une ou plusieurs sources sonores. Dans ce cas, le déplacement en abscisse de chaque pion à l'intérieur de chaque zone contrôle la fréquence du filtre, tandis que le déplacement en ordonnée contrôle le facteur qualité ou la largeur de bande du filtre.

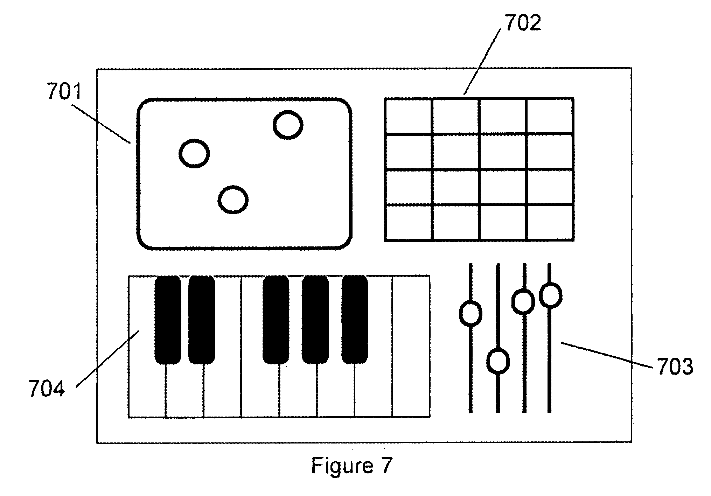

La figure 7 représente un exemple de contrôle d'un synthétiseur ou d'un échantillonneur de type connu. L'interface se compose d'un clavier tempéré (704) contrôlant la hauteur des sons, d'un groupe de quatre potentiomètres (703) verticaux permettant de contrôler par exemple son enveloppe dynamique (temps d'attaque, temps de décroissance, niveau d'entretien, temps de relâchement). Une aire 2D (701) contenant 3 pions permet de contrôler par exemple des effets appliqués au son (réverbération, écho, filtres). Une matrice de 16 boutons (702) peut par exemple déclencher 16 différentes séquences musicales enregistrées ou encore rappeler 16 configurations pré-enregistrées des contrôles décrits précédemment.

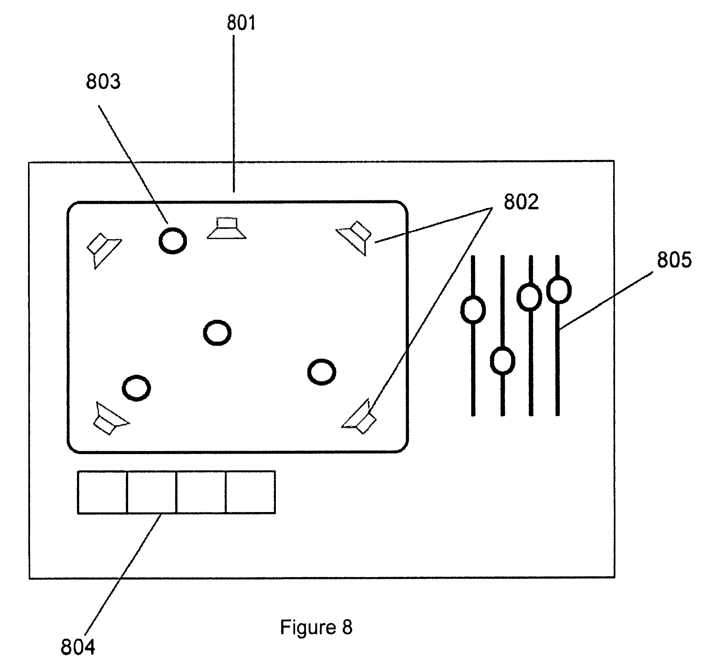

Un autre exemple d'application de l'invention est illustré par la figure 8 représentant le contrôle d'un dispositif de diffusion de différentes sources sonores dans l'espace, sur un dispositif constitué de plusieurs haut-parleurs. Dans cette configuration, une aire 2D (801) représentant l'espace de diffusion contient 4 pions (801) correspondant à quatre sources sonores. L'aire 2D contient également 5 icônes (802) représentant le positionnement de cinq haut-parleurs. En déplaçant les différents pions (802) on règle le niveau et/ou la phase de chaque source sonore par rapport à chaque enceinte, ce qui détermine son emplacement dans l'espace. Un groupe de quatre potentiomètres linéaires (803) permet qui plus est de régler le niveau relatif de chaque source. Un ensemble de quatre boutons (804) permet d'activer ou de désactiver chaque source sonore.

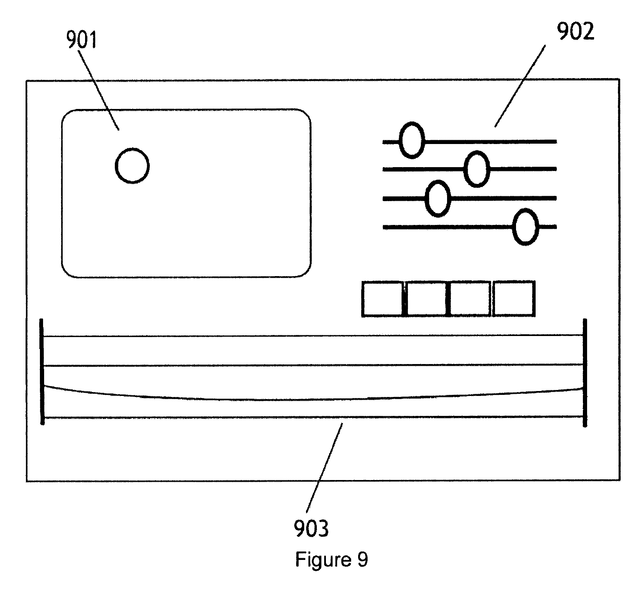

Un autre exemple est illustré par la figure 9 qui représente le contrôle d'un synthétiseur ou d'un générateur de son selon une configuration différente de celle représentée par la figure 7. Ici, la fréquence du générateur de son est contrôlée par quatre cordes virtuelles (903). La tension initiale (l'accord) de chaque corde peut elle-même être contrôlée, par exemple, par un potentiomètre linéaire (902). Une aire 2D peut par exemple contrôler d'autres paramètres du générateur de son, tel que le niveau de sortie, le timbre, le panoramique, etc.

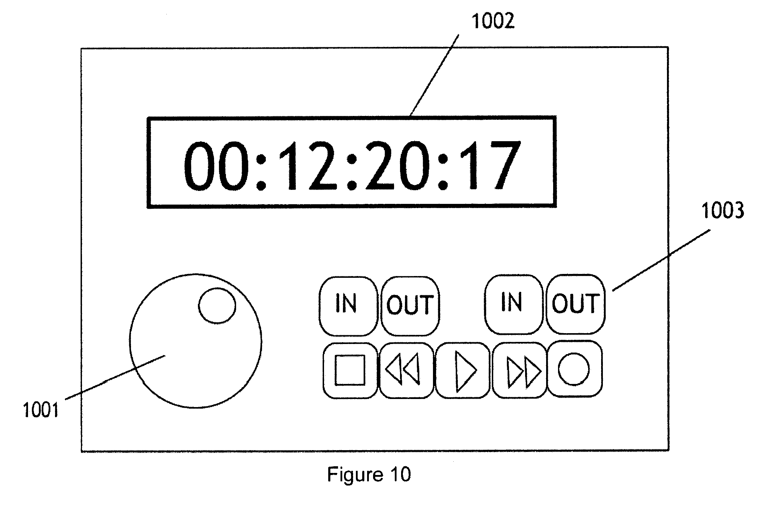

La figure 10 représente le contrôle d'un équipement de montage audio et/ou vidéo de type connu. Une molette (1001) permet de contrôler la vitesse de lecture des sources audio et/ou vidéo. Un objet d'affichage de statut (1002) permet de représenter le positionnement de la lecture selon un format (heure, minute, seconde, image) de type connu. Un ensemble de boutons (1003) permet d'accéder aux fonctions de lecture et de montage de l'appareil contrôlé.

## Revendications

1. Dispositif d'acquisition d'informations tactiles comprenant un capteur tactile matriciel (101) pourvu de lignes et de colonnes, **caractérisé en ce que** le dispositif comprend des moyens électroniques de balayage agencés pour balayer séquentiellement les lignes et les colonnes du capteur tactile matriciel.

2. Dispositif d'acquisition d'informations tactiles selon la revendication 1, dans lequel les moyens électroniques de balayage sont agencés pour alimenter successivement les colonnes et pour mesurer le niveau des lignes séquentiellement lors de l'alimentation de chaque colonne.

3. Dispositif d'acquisition d'informations tactiles selon la revendication 2, dans lequel, lors de l'alimentation de chaque colonne, les moyens électroniques de balayage sont agencés pour lire dans un premier temps la valeur sur la première ligne, les autres lignes étant reliées à la masse, puis pour lire la valeur sur la deuxième ligne, et ainsi de suite jusqu'à ce que toutes les lignes aient été lues, de sorte à me mesurer le niveau des lignes séquentiellement.

4. Dispositif d'acquisition d'informations tactiles selon la revendication 2, dans lequel dans lequel les moyens électroniques de balayage sont agencés alimenter successivement une des colonnes, les autres colonnes étant en haute impédance de sorte à empêcher la propagation de courant dans celles-ci.

5. Dispositif d'acquisition d'informations tactiles selon la revendication 4, dans lequel les moyens électroniques de balayage sont agencés alimenter la première colonne, les autres colonnes étant en haute impédance, puis pour alimenter la deuxième colonne, les autres colonnes étant en haute impédance, et ainsi de suite jusqu'à la dernière colonne.

6. Dispositif d'acquisition d'informations tactiles selon l'une des revendications précédentes, dans lequel des moyens électroniques de balayage agencés pour balayer séquentiellement les lignes et les colonnes du capteur matriciel au moins cent fois par secondes.

7. Dispositif d'acquisition d'informations tactiles selon l'une des revendications précédentes, comprenant un comparateur de tension pilotée numériquement en sortie des lignes lues afin de déterminer si la tension observée est supérieure à un seuil de comparaison.

8. Dispositif d'acquisition d'informations tactile selon la revendication précédente, dans lequel le seuil de comparaison est modifié à chaque mesure de ligne.

9. Dispositif d'acquisition d'informations tactiles selon la revendication précédente, dans lequel le seuil de comparaison est décrémenté à chaque mesure de ligne.

10. Dispositif d'acquisition d'informations tactiles selon l'une des revendications précédentes, comprenant des moyens de filtrage agencés pour détecter des zones englobant des nuages de plusieurs points de contact avec le capteur tactile matriciel.

11. Dispositif d'acquisition d'informations tactiles selon la revendication 10, comprenant en outre des moyens agencés pour calculer le barycentre de chaque zone englobante.

12. Dispositif d'acquisition d'informations tactiles selon l'une des revendications précédentes, dans lequel le capteur tactile matriciel comprend deux faces superposées sur lesquelles sont organisées des pistes d'oxyde indium étain de sorte à former les lignes et les colonnes.

13. Dispositif d'acquisition d'informations tactiles selon la revendication précédente, dans lequel le capteur comprend en outre une couche d'un matériau résistif transparent dont la résistance varie en fonction de son écrasement, la couche de matériau transparent étant agencée de sorte à isoler les deux faces l'une de l'autre.

14. Dispositif d'acquisition d'informations tactiles selon la revendication 12, dans lequel le capteur tactile matriciel comprend en outre des entretoises d'espacement agencées de sorte à isoler les deux faces l'une de l'autre.

15. Procédé pour acquérir des informations tactiles sur un capteur tactile matriciel pourvu de lignes et de colonnes, **caractérisé en ce qu'**il comprend une étape consistant à balayer séquentiellement les lignes et les colonnes du capteur tactile matriciel de sorte à détecter des points de contacts sur le capteur tactile matriciel, pour acquérir les informations tactiles.
